**Europäisches Patentamt**

**European Patent Office**

**Office européen des brevets**

(19)

(11) Veröffentlichungsnummer : **0 341 508 B1**

(12) **EUROPÄISCHE PATENTSCHRIFT**

(45) Veröffentlichungstag der Patentschrift :
**05.08.92 Patentblatt 92/32**

(21) Anmeldenummer : **89107688.7**

(22) Anmeldetag : **27.04.89**

(51) Int. Cl.⁵ : **A01F 15/07**

(30) Priorität : **11.05.88 DE 3816204**

(43) Veröffentlichungstag der Anmeldung :
**15.11.89 Patentblatt 89/46**

(45) Bekanntmachung des Hinweises auf die
Patenterteilung :
**05.08.92 Patentblatt 92/32**

(84) Benannte Vertragsstaaten :
**DE FR GB NL**

(56) Entgegenhaltungen :
**EP-A- 0 077 474**
**DE-A- 2 740 339**
**DE-A- 3 442 831**
**DE-A- 3 445 050**

(73) Patentinhaber : **GREENLAND GMBH & CO. KG**
**Erwin-Dietrich-Platz 1**
**W-7702 Gottmadingen (DE)**

(72) Erfinder : **von Allwörden, Wilhelm**
**Alpenstrasse 18**
**W-7704 Gailingen (DE)**

(74) Vertreter : **Patentanwälte Grünecker,**
**Kinkeldey, Stockmair & Partner**
**Maximilianstrasse 58**
**W-8000 München 22 (DE)**

(54) **Grossballenpresse.**

EP 0 341 508 B1

## Beschreibung

Die Erfindung bezieht sich auf eine Großballenpresse der im Anspruch 1 erläuterten Art und ein Verfahren zum Herstellen eines Großballens unter Verwendung dieser Großballenpresse.

Eine derartige Großballenpresse ist aus der DE-A-27 40 339 bekannt. Die bekannte Großballenpresse weist ein Schneidwerk auf, dessen Messer in und aus dem Förderkanal schwenkbar sind, um beispielsweise Steinen oder harten Ästen oder dgl. ausweichen zu können. Mit der bekannten Großballenpresse soll die Auflösbarkeit der gebildeten Rundballen verbessert werden, indem das Halmgut vor dem Pressen geschnitten wird, damit sich die Halme nicht so stark miteinander verfilzen, wie dies bei ungeschnittenem Halmgut der Fall ist. Der bekannte Rundballen kann sich jedoch genausoleicht auflösen, wenn dies eigentlich nicht erwünscht ist, beispielsweise, wenn der Rundballen von einer Ladefläche fällt. Außerdem ist ein Rundballen aus geschnittenem Halmgut gegen das Eindringen von Regenwasser nicht sehr widerstandsfähig.

Die DE-A-34 45 050 beschreibt eine Großballenpresse mit einem Schneidwerk, dessen Messer in festen Abständen und vorbestimmter Lage zueinander auf einer Schaltwelle sitzen. Die Messer sind mitsamt der Schaltwelle aus dem Förderkanal herausschwenkbar, um die Messer in ihrer Lage zueinander verstellen zu können. Durch das Verstellen der gegenseitigen Lage der Messer wird die Schnittbreite des Halmgutes verändert, so daß die Schnittbreite auf die für jede Halmart erforderliche Länge eingestellt werden kann. Für die Herstellung des gesamten Rundballens wird jedoch geschnittenes Halmgut verwendet.

Ein Schneidwerk, dessen Messer wesentlich einfacher auf die gewünschte Schnittbreite einstellbar ist, ist der EP-A-77470 zu entnehmen. Dieses Schneidwerk wird jedoch bei einem Selbstlade-Erntewagen eingesetzt, der das Erntegut lose, d.h. nicht zu Ballen gepreßt, transportiert.

Der Erfindung liegt somit die Aufgabe zugrunde, eine Großballenpresse mit einem konstruktiv einfach aufgebauten Schneidwerk mit aus- und einschwenkbaren Messern, sowie ein Verfahren für ihren Betrieb bereitzustellen, mit dem leicht auflösbare Großballen herstellbar sind, die jedoch gegen ein unbeabsichtigtes Auflösen weitgehend geschützt sind.

Die Aufgabe wird durch eine Großballenpresse mit den Merkmalen des Anspruches 1 und ein Verfahren mit den Merkmalen des Anspruchs 12 gelöst.

Durch die erfindungsgemäße Ausgestaltung können Rundballen gewickelt werden, deren Inneres aus geschnittenem Halmgut besteht, das sich später leicht auflösen läßt, und deren Mantel aus ungeschnittenem Halmgut besteht, das das Innere gegen ein unbeabsichtigtes Auflösen und gegen Witterungseinflüsse weitgehend schützt. Dabei wird das Schneidwerk spätestens bei Beginn des Wickelns der letzten Mantelschicht insgesamt aus dem Förderkanal verschwenkt. Zum selbstätigen Steuern der Ausschwenkbewegung des Schneidwerks werden an sich bekannte (DE-A-28 31 315) Fühler für den Innendruck und/oder den Ballendurchmesser verwendet.

Vorteilhafte Weiterbildungen der Erfindung sind den Unteransprüchen zu entnehmen.

Die Messerhebel wenigstens einer Messerreihe sollten in etwa ihrer Mitte drehbar an einem festen Bolzen gelagert sein, wobei diese Messerreihe einer Schaltwelle zugeordnet ist, die mit einer der Anzahl der Messer entsprechenden Anzahl von direkt den Messerhebeln zugeordneten Kurvenscheiben versehen ist, wobei die Kurvenscheiben in Bezug auf den Umfang der Schaltwelle versetzt zueinander angeordnet sind.

Jede Kurvenscheibe weist eine Hubkurve einen zentrischen Teil und einer Senkkurve auf.

Vorteilhafterweise ist die Schaltwelle mit eine Drehvorrichtung verbunden, die eine Schaltwelle, ein Stirnrad- oder Schneckenradgetreibe aufweisen kann oder aber ein Gewindezug- oder Druckstange mit Handratsche.

Bei einem anderen vorteilhaften Ausführungsbeispiel kann die Drehvorrichtung eine Gewindezug- oder Druckstange mit einem Druckzylinder aufweisen oder aber einen Stufenantrieb mit einem Klinkengesperre und einem Zackenrad, die über eine Zugstange mit der über Hydraulikzylinder verschwenkbaren Aufnahmevorrichtung für das Halmgut verbunden sein kann.

Dem Zackenrad ist vorzugsweise ein drehbares Stellsegment zugeordnet, das unter der Kraft einer Feder am Zackenrad anliegt und an dieses einrastbar ist, wobei das Stellsegment einen Abschnitt aufweist, welcher mindestens die Breite einer Zahnlücke des Zackenrades aufweist und im Bereich dieses Abschnitts über die äußere Kante des Zackenrades hinausragt und in den Wirkungsbereich einer Vorschubklinke eingreift.

Besonders vorteilhaft ist es wenn die Messerreihe aus mehreren Messergruppen besteht und wenn die Kurvenscheiben jeder Messergruppe derart zueinander versetzt sind, daß die Ausschwenkung der nächstfolgenden Messergruppe in eine Außerbetriebstellung erst einsetzt, wenn die Ausschwenkung der vorhergehenden Gruppe erfolgt ist.

Es ist ferner möglich die Schaltwelle mit einer Bremsvorrichtung zu versehen, um so zu verhindern, daß sämtliche ausgeschwenkte Messer bei weiterer Betätigung der Schaltwelle schlagartig in die Schneidstellung vorschnellen, d.h. die Vorschnellbewegung der ausgeschwenkten Meser zu verlangsamen.

Mit der Erfindung wird also der Vorteil erzielt, die hohe Flächenleistung von Großballenpressen voll auszunutzen und das Schneidwerk entweder mit wenigen Handgriffen auf unterschiedliche Schnittlängen einzustellen oder vollständig aus dem Förderkanal zu verschwenken, bevor der Großballen fertig gewickelt ist. Insbesondere bei Verwendung eines Klinkengesperres mit Zackenrad als Drehvorrichtung für die Schaltwelle in Verbindung mit der vorhandenen hydraulischen Verschwenkung der Aufnahmevorrichtung kann eine Schnittlängenverstellung dadurch erfolgen, daß die Pick-up-Vorrichtung einmal oder mehrfach angehoben und abgesenkt wird, wodurch die Zugstange in Verbindung mit einer Vorschubklinke des Klinkenradgesperres intermittierende Bewegungen ausführt. Bei geeigneter Versetzung der einzelnen Kurvenscheibe wird bei jedem Anheben immer jedes zweite Messer ausgeklappt, so daß sich bei jeder Stufe die Schnittlänge verdoppelt.

Im folgenden wird die Erfindung anhand der Zeichnung näher erläutert, in der ein vorteilhaftes Ausführungsbeispiel dargestellt ist. Es zeigen:

Figur 1 eine schematische Seitenansicht einer Großballenpresse mit einem Schneidwerk;

Figur 2 eine vergrößerte Darstellung des Schneidwerks;

Figur 3 eine vergrößerte Seitenansicht einer Drehvorrichtung für die Schaltwelle und

Figur 4 eine Schnittdarstellung IV-IV von Figur 3.

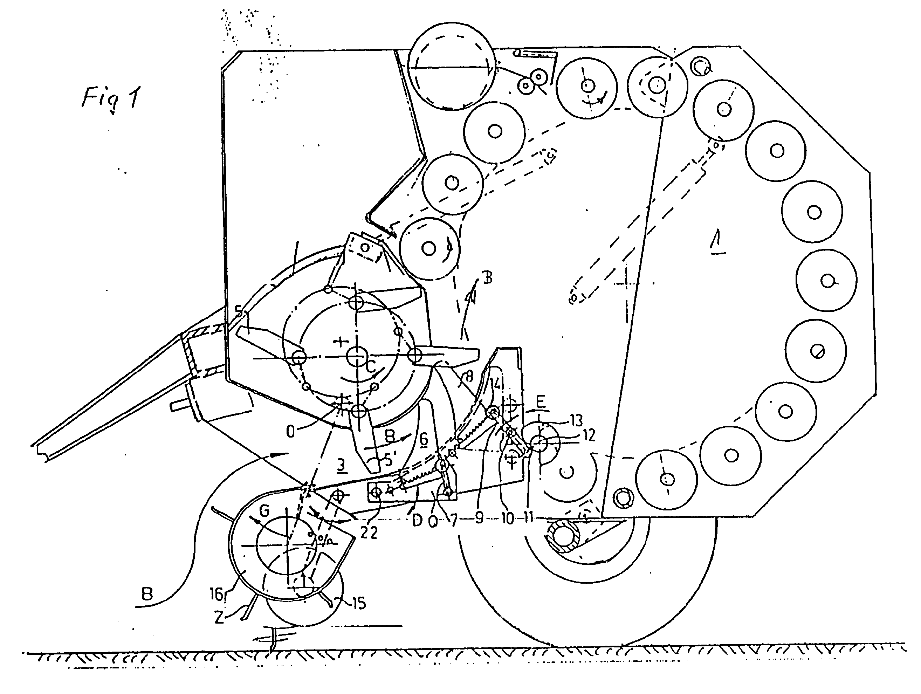

In Figur 1 ist schematisch ein Schnitt durch eine Großballenpresse gezeigt, die z.B. von einem Traktor gezogen wird. Die Großballenpresse weist in herkömmlicher Weise eine nicht näher dargestellte Bindevorrichtung für den fertigen Ballen auf, der in der Preßkammer 1 durch die Vielzahl von ihn umgebenden entlang der Außenwandung angeordneten Preßwalzen ausgebildet wird. Nach der fertigen Ausbildung des Ballens sowie seiner Umschnürung wird die hintere Hälfte der Preßkammer durch einen hydraulischen Zylinder angehoben und der Ballen dabei ausgestoßen.

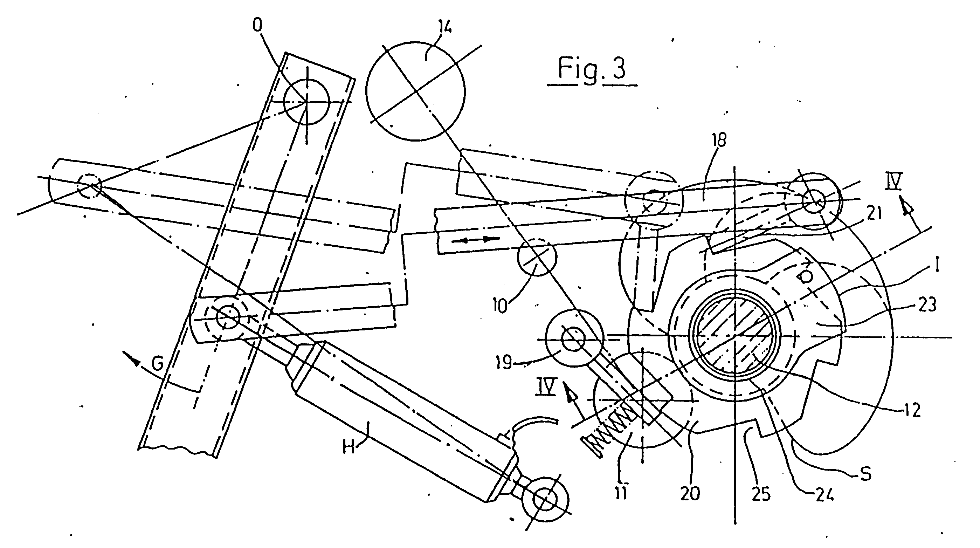

Zur Herstellung des Ballens wird das gemähte Halmgut von der Aufnahmevorrichtung (Pick-up) 16 in Richtung der Pfeile B durch einen Förderkanal 3 hindurch in das Innere der Preßkammer 1 befördert. Die Aufnahmevorrichtung 16 kann z.B. in Richtung des Pfeiles G über in Figur 3 dargestellte links und rechts angeordnete Hydraulikzylinder H um den Punkt 0 verschwenkt werden. Mit 15 ist ein verstellbares Tastrad bezeichnet, durch welches der Abstand der Zinken Z zum Boden fixiert wird.

Im Förderkanal 3 ist eine Fördervorrichtung 4 vorgesehen, die z.B. ein Rechenkettenförderer oder ein Trommelförderer sein kann mit einer Vielzahl von Förderzinken 5, 5', die in den Förderkanal beim Umlauf eingreifen und zum Transport des Ladegutes in der durch den Pfeil B angegebenen Richtung dienen. Das von der Aufnahmevorrichtung 16 aufgenommene, dem Förderkanal 3 zugeführte Ladegut wird von den Förderzinken 5, 5' in gleich große Portionen dosiert und in gleichmäßigem Fließverfahren in den Preßraum 1 geführt. Die Drehrichtung der Fördervorrichtung 4 ist dabei durch den Pfeil C angedeutet.

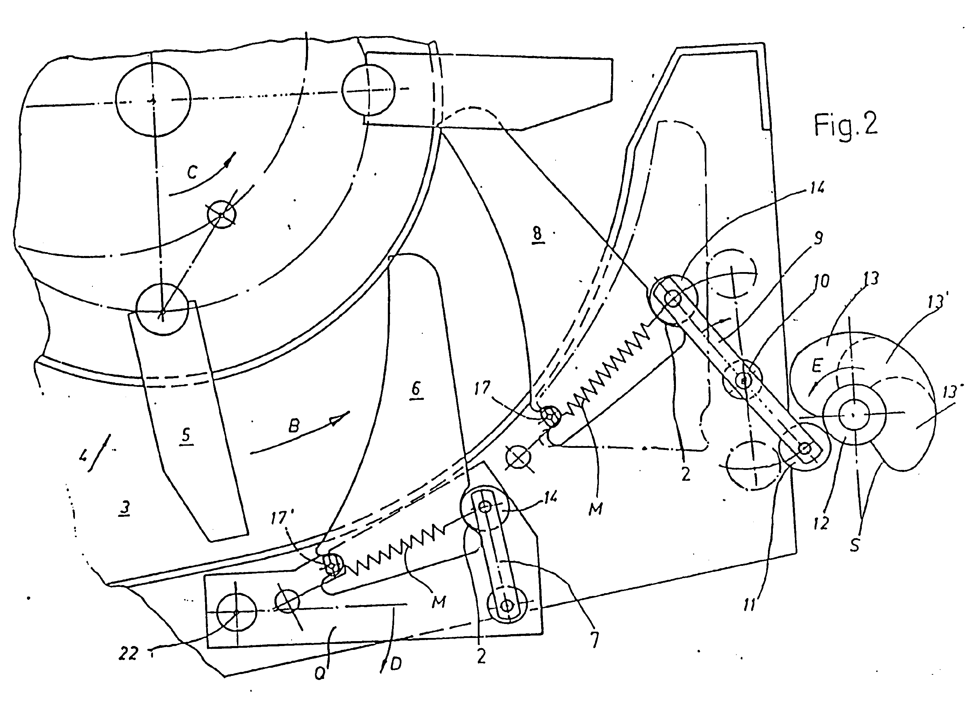

In den Förderkanal 3 ragt mindestens eine quer zum Förderkanal angeordnete Reihe schwenkbar gelagerter Messer zum Zerkleinern des Halmgutes. Bei dem in Figur 1 dargestellten Ausführungsbeispiel sind Messerreihen vorgesehen, wobei ein zur unteren Reihe gehörendes Messer 6 und ein zur oberen Reihe gehörendes Messer 8 mit einem Drehpunkt 17' bzw. 17 (Figur 2) jeweils auf Traversen so angeordnet sind, daß die doppelarmigen Förderzinken 5, 5' um sie herum greifen.

Bei einem weiteren, nicht dargestellten Ausführungsbeispiel ist nur eine Messerreihe, z.B. 6, vorgesehen, die keine Schaltwelle aufweist zur Schnittlängenveränderung, jedoch mit einer geeigneten Verschwenkvorrichtung verbunden ist, um noch während des Wickelvorgangs aus dem Förderkanal insgesamt verschwenkt werden zu können.

Bei beiden Ausführungsbeispielen, d.h. bei der einfachen Messerreihe und bei der doppelten Messerreihe mit Schaltwelle zur Schnittlängenveränderung können dem Preßraum ein Fühler für den Innendruck des gerade gewickelten Großballens und/oder eine Meßvorrichtung für den Ballendurchmesser vorgesehen sein, um so zu einem geeigneten Zeitpunkt entweder die eine Messerreihe oder die beiden Messerreihen aus dem Förderkanal zu verschwenken, so daß die äußerste Mantelschicht des kurz vor der Vollendung stehenden Großballens aus ungeschnittenem Halmgut gewickelt werden. Diese letzte Mantelschicht bzw. die letzten beiden Mantelschichten aus ungeschnittenem Material schützen den Ballen besser als geschnittenes Halmgut, wobei die Auflösbarkeit des Ballens insgesamt durch den geschnittenen Innenanteil gewährleistet ist.

In Figur 1 ist mit 7 ist ein Messerhebel für mehrere in Reihe nebeneinander angeordnete untere Messer 6 bezeichnet, wobei der Messerhebel 7 an seinem oberen Ende wie üblich eine Messerrolle 14 trägt, welche zusammen mit geeigneten Federn M bekannte Überlastsicherung und Rückführeinrichtung für die Messer darstellt. Dabei ist für jedes Messer 6 ein eigener Messerhebel 7 vorgesehen, wobei die unteren Messer 6 in herkömmlicher Art und Weise als Ganzes um den Drehpunkt 22 einer Quertraverse Q, auf welche die Messer 6 über die Drehpunkte 17' schwenkbar gelagert sind, aus dem Förderkanal 3 verschwenkt werden können, so daß die Schnittbreite im Kanal verdoppelt wird.

Mit 9 sind Messerhebel für die oberen Messer 8 bezeichnet, wobei ebenfalls für jedes Messer ein eigener Messerhebel vorgesehen ist. Die Messerhebel 9 tragen an ihren oberen Enden eine federbelastete Messerrolle 14, die in einer Vertiefung 2 am Rücken der Messer 8 einrastet. Auch hier ist also die bekannte Überlastsicherung und Rückführeinrichtung für jedes Messer 8 der oberen Reihe gewährleistet, so daß diese beim Auftreffen eines Fremdkörpers nach hinten verschwenken und nach Passieren dieses Fremdkörpers durch die Federn M wieder in ihre Arbeitsstellung verschwenkt werden. Die Messerhebel 9 für die oberen Messer 8 sind nun in ihrer Mitte an einem Drehpunkt 10 gelenkig gelagert, um den sie unter dem Einfluß einer hinter der Messerreihe gelagerten Schaltwelle 12 verschwenkt werden können.

Die Schaltwelle 12 trägt für jedes Messer eine Kurvenscheibe 13, 13′, 13″, die unterschiedlich ausgestaltet sein können. Die Kurvenscheiben sind dabei so zueinander versetzt (z.B. 90° oder 60°), daß die Ausschwenkung der nächsten Messergruppe erst einsetzt, wenn die vorherige Ausschwenkung annähernd oder ganz abgeschlossen ist. Die wirksame auf die Schaltrolle 11 des Messerhebels 9 wirkende Außenkontur der Kurvenscheibe weist eine Hubkurve, z.B. einen Kreisbogen oder eine Spirale auf sowie einen zentrischen Teil und eine eventuell gerade Senkkurve S auf.

Durch geeignetes Verdrehen der Schaltwelle 12 in Richtung des Pfeiles E kann durch Einwirkung der versetzt zueinander angeordneten Kurvenscheiben 13 auf eine Anzahl von Messerhebeln 9 eine bestimmte Anzahl von Messern 8, bzw. eine Messergruppe, aus dem Förderkanal 3 in eine Außerbetriebstellung (strichpunktierte Darstellung) zurückgeschwenkt werden, z.B. jedes zweite Messer, so daß die Schnittbreite verdoppelt wird. Im gezeigten Beispiel werden durch das Verdrehen der Schaltwelle 12 bzw. der Kurvenscheiben 13 ein Drittel der Messerhebel 9 nach rechts verschwenkt und somit auch die federbelasteten Rollen 14 vom Messerrücken abgehoben. Dadurch schwenken die Messer 8 infolge ihres Gewichtes und der Lage ihres Schwerpunktes um ihre Schwenkachse 17 in die strichpunktierte Lage, wobei ihre unterste Schwenklage durch die Endlage der Rollen 14 begrenzt wird. Durch weiteres Verdrehen der Schaltwelle 12 um einen Schritt wirken nun die Kurvenscheiben 13′ z.B. auf jedes zweite der noch verbleibenden Messer, so daß diese ebenfalls ausgeschwenkt werden und die Schnittbreite erneut verdoppelt wird. Ein weiteres Verdrehen der Schaltwelle 12 um einen Schritt bewirkt, daß nun sämtliche Messer durch das Verdrehen der Kurvenscheibe 13, 13′, 13″ aus dem Förderkanal 3 ausgeschwenkt werden, so daß das Ladegut ungeschnitten den Förderkanal passiert und in das Innere der Großballenpresse gefördert wird. Sollte ein Messer infolge leichter Verklemmung nicht aufgrund seines Eigengewichtes ausschwenken, so erfolgt die Ausschwenkbewegung automatisch beim Laden durch den Ladedruck des Halmgutes.

Zur Betätigung der Schaltwelle 12 gibt es verschiedene Möglichkeiten. Ein direktes manuelles Verdrehen der Schaltwelle 12 ist aufgrund des hohen Drehmomentes und der vielen zu spannenden Messerfedern M nicht möglich. Hingegen kann eine indirekte Handbetätigung mit Übersetzungsgetriebe z.B. mittels eines Stirnrad- oder Schneckenradgetriebes erfolgen, wozu jedoch noch ein erheblicher Kraftaufwand erforderlich ist.

Auch eine indirekte Handbetätigung über eine Gewindezug- oder Druckstange mit Handrad ist möglich, wobei in diesem Fall die Kurvenscheiben jedoch eine relativ steile Hubkurve aufweisen müssen.

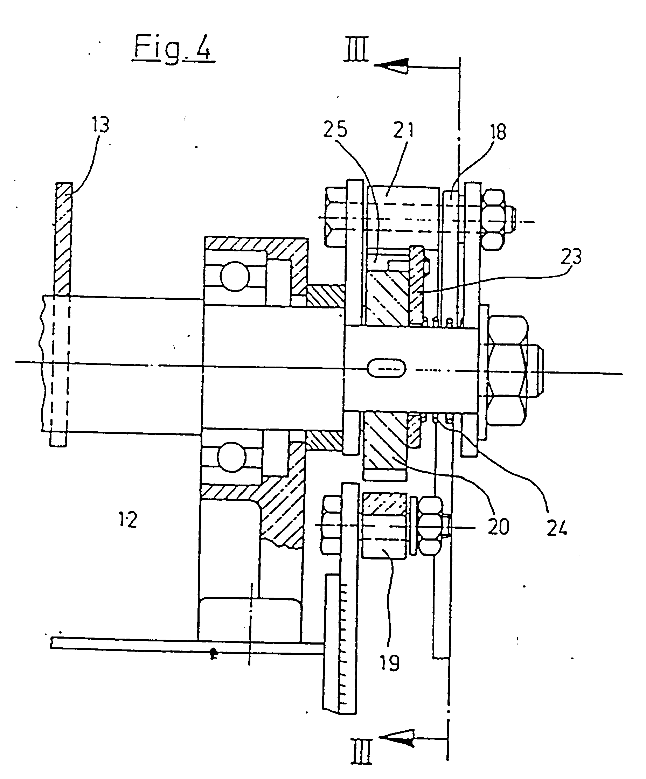

Ferner ist es möglich die Schaltwelle 12 direkt durch eine Hydraulik zu betätigen, wobei anstelle der Gewindedruckstange ein Druckzylinder erforderlich ist mit einem besonderen Hydraulikanschluß. Besonders vorteilhaft ist es, wenn die Drehvorrichtung für die Schaltwelle 12 aus einem Stufenantrieb mit Klinkengesperre und Zackenrad besteht (Figuren 3 und 4) und wenn der Antrieb über eine Zugstange 18 von der vorhandenen hydraulischen Hebevorrichtung für die Aufnahmevorrichtung 16 betätigt wird. In diesem Fall ist kein zusätzlicher Hydraulikzylinder mit eigenem Anschluß und Ventil erforderlich. Eine Schnittbreitenverstellung erfolgt im gezeigten Beispiel jedesmal sobald die Aufnahmevorrichtung 16 einmal angehoben und abgesenkt wird. Die Anzahl des Anhebens und Absenkens der Aufnahmevorrichtung zum Erreichen einer Schnittbreitenverstellung richtet sich nach der Anordnung der Kurvenscheibe. Es kann auch eine andere Anordnung gewählt werden, wobei mehrmals auf- und abgesenkt werden muß und wobei die Abstimmung des Ausschwenkens der nachfolgenden Messer verfeinert werden kann.

Figur 3 zeigt schematisch eine Seitenansicht einer derartigen Drehvorrichtung. Mit 12 ist wieder die Schaltwelle bezeichnet, die mit einem Zackenrad 20 versehen ist. Zur Einstellung und Vorwahl der gewünschten Schnittlänge ist neben dem Zackenrad 20 ein Stellsegment 23 angeordnet, das über eine Druckfeder 24 gegen das Zackenrad gedrückt wird und an der vorgewählten Zahnlücke 25 einrastet (Figur 4). Ein kurzer Bogen I deckt dabei diese Zahnlücke so ab, daß die Vorschubklinke 21 nicht einrasten kann und die so eingestellte Schnittlänge erhalten bleibt. Eine Betätigung der mit Aufnahmevorrichtungen verbundenen Zugstange 18 verdreht die Schaltwelle über die Klinke 21 um einen Schritt, so daß die Kurvenscheiben 13 auf die Schaltrollen 11 einer Anzahl von Messern 8 einwirken und diese ausschwenken.

Vorteilhafterweise kann dem Stellsegment 23 eine nicht dargestellte Vorwahlskala zugeordnet sein, woraus ersichtlich ist wie weit das Stellsegment gedreht werden muß um eine gewünschte Schnittlänge zu erhalten. Das Stellsegment 23 kann auch in eine derartige Lage gebracht werden, daß sämtliche Messer im Eingriff bleiben und das während des Betriebs erforderliche Auf- und Abschwenken der Aufnahmevorrichtung keine Verdrehung der Schaltwelle hervorruft. Das Stellsegment 23 wird dabei so eingestellt, daß die Klinke 21 nicht zum Eingriff in das Zackenrad 20 kommt.

Beim Verdrehen der Schaltwelle 12 werden die Messerhebel 9 entgegen ihrer Beaufschlagung durch die Federn M nach rechts verdreht, d.h. die Schaltrollen 11 üben eine Druckkraft auf die Kurvenscheibe 13 aus, die entgegen der Drehrichtung der Schaltwelle 12 gerichtet ist. Um ein Zurückdrehen der Schaltwelle 12 infolge dieser Druckkraft beim Zurückführen der Klinke 21 zu vermeiden, ist es erforderlich, zusätzlich eine Rückhalteklinke 19 dem Zackenrad 20 zuzuordnen. Die Rückhalteklinke ist dabei mit einem Federelement in Verbindung, welches sie immer in Anlage an das Zackenrad hält.

Nachdem alle Messer ausgeschwenkt sind, kann durch ein Weiterdrehen der Schaltwelle 12 ein vollständiges Einschwenken sämtlicher Messer 8 in den Förderkanal 3 erfolgen, wobei diese jedoch unter dem Einfluß der mit den Messerrollen verbundenen Vorspannfedern M diese schlagartig in die Schneidstellung vorschnellen würden. Um diese zu verhindern, ist an der Schaltwelle 12 eine nicht dargestellte Bremsvorrichtung angeordnet, die in diesem letzten Drehwinkelbereich wirksam wird, wodurch die Bewegung der in den Förderkanal 3 vorspringenden Messer 8 verlangsamt wird.

Die Erfindung schafft also eine Großballenpresse mit einem Schneidwerk, das ein Einstellen der Schnittlänge auf vorgewählte Werte durch Ausschwenken einzelner oder aller Messer einer oder mehrerer Messergruppen aus der Arbeitsstellung in eine Außerbetriebsstellung durch einfaches Anheben oder Absenken der Aufnahmevorrichtung erlaubt. Die Fremdkörpersicherung durch Ausschwenken der einzelnen Messer über die ganze Förderkanalbreite beim Auftreffen eines Hindernisses und selbsttätiges Rückstellen nach dem Passieren des Hindernisses ermöglicht ein Einhalten der einmal eingestellten Schnittbreite.

**Patentansprüche**

1. Großballenpresse für geschnittenes Halmgut mit einer aufklappbaren Preßkammer (1), die eine Einlaßöffnung für das Halmgut und eine Bindeanordnung für den fertigen Ballen aufweist, mit einer Aufnahmevorrichtung (16) für das Halmgut, mit einer zwischen der Aufnahmevorrichtung (16) und der Einlaßöffnung angeordneten Fördertrommel, deren Länge der Breite des zu bildenden Ballens entspricht, und mit einem Schneidwerk, das in einem Förderkanal (3) vorgesehen ist, wobei das Schneidwerk eine Vielzahl von in ihrer Schneidstellung in den Förderkanal (3) ragenden und in mindestens einer Reihe angeordneten sowie jeweils in und aus dem Förderkanal (3) schwenkbar gelagerten Messer (6, 8) enthält, **dadurch gekennzeichnet**, daß die Messer (6, 8) mittels federbelasteter Messerhebel (7, 9) in ihrer Schneidstellung gehalten werden und in ihrer Gesamtheit durch eine Verschwenkvorrichtung (12, 13, 13', 13'', 22) entgegen der Federbelastung bis zu einer Stelle verschwenkbar sind, in der sie keine Schneidwirkung auf das Halmgut ausüben, wobei die Verschwenkvorrichtung durch einen Fühler für einen Innendruck des Großballens oder einer Meßvorrichtung für den Durchmesser des Großballens derart steuerbar ist, daß mindestens die äußerste Mantelschicht des Großballens aus ungeschnittenem Halmgut gewickelt werden kann.

2. Großballenpresse nach Anspruch 1, **dadurch gekennzeichnet,** daß die Messerhebel (9) wenigstens einer Messerreihe (8) in etwa ihrer Mitte drehbar an einem festen Bolzen (10) gelagert sind und dieser Messerreihe (8) eine Schaltwelle (12) zugeordnet ist, die mit einer der Anzahl der Messer (8) entsprechenden Anzahl von direkt den Messerhebeln (9) zugeordneten Kurvenscheiben (13, 13', 13'') versehen ist, wobei die Kurvenscheiben in Bezug auf den Umfang der Schaltwelle versetzt zueinander angeordnet sind.

3. Großballenpresse nach Anspruch 2, **dadurch gekennzeichnet**, daß jede Kurvencheibe (13, 13', 13'') eine Hubkurve, einen zentrischen Teil und eine Senkkurve aufweist.

4. Großballenpresse nach Anspruch 2 oder 3, **dadurch gekennzeichnet,** daß die Schaltwelle (12) mit einer Drehvorrichtung verbunden ist.

5. Großballenpresse nach Anspruch 4, **dadurch gekennzeichnet,** daß die Drehvorrichtung für die Schaltwelle (12) ein Stirnrad- oder Schneckenradgetriebe aufweist.

6. Großballenpresse nach Anspruch 4, **dadurch gekennzeichnet,** daß die Drehvorrichtung für die Schaltwelle (12) eine Gewindezug- oder Druckstange mit Handratsche aufweist.

7. Großballenpresse nach Anspruch 4, **dadurch gekennzeichnet**, daß die Drehvorrichtung eine Gewindezug- oder Druckstange mit einem Druckzylinder aufweist.

8. Großballenpresse nach Anspruch 4, **dadurch gekennzeichnet,** daß die Drehvorrichtung einen Stufenantrieb mit einem Klinkengesperre und einem Zackenrad (20) aufweist, die über eine Zugstange (18) mit der über Hydraulikzylinder verschwenkbaren Aufnahmevorrichtungen (16) für das Halmgut verbunden sind.

9. Großballenpresse nach Anspruch 8, **dadurch gekennzeichnet,** daß dem Zackenrad (20) ein drehbares Stellsegment (23) zugeordnet ist, das unter der Kraft einer Feder (24) am Zackenrad (20) anliet und in dieses einrastbar ist, wobei das Stellsegment (13) einen Abschnitt ("I") aufweist, welcher mindestens die Breite einer Zahnlücke des Zackenrades aufweist und im Bereich dieses Abschnitts über die äußere Kante des Zackenrades (20) hinausragt und in den Wirkungsbereich einer Vorschubklinke (21) eingreift.

10. Großballenpresse nach einem der Ansprüche 2 bis 9, **dadurch gekennzeichnet**, daß die Messerreihe (6, 8) aus mehreren Messergruppen besteht und daß die Kurvenscheiben (13, 13', 13") jeder Messergruppe derart zueinander versetzt sind, daß die Ausschwenkung der nächstfolgenden Mesergruppe in eine Außerbetriebsstellung erst einsetzt, wenn die Ausschwenkung der vorhergehenden Gruppe erfolgt ist.

11. Großballenpresse nach einem der Ansprüche 1 bis 10, **dadurch gekennzeichnet,** daß die Schaltwelle (12) mit einer Bremsvorrichtung versehen ist.

12. Verfahren zur Herstellung eines Großballens unter Verwendung einer Großballenpresse nach einem der Ansprüche 1 bis 11, wobei der Großballen aus geschnittenem Halmgut gewickelt wird, **dadurch gekennzeichnet,** daß der Durchmesser des Großballens und/oder der Innendruck des Großballens während des Wickelvorgangs gemessen wird und bei Erreichen eines vorgegebenen Schwellwertes das Schneidwerk insgesamt aus dem Förderkanal verschwenkt wird, so daß mindestens die äußerste Mantelschicht des Großballens aus ungeschnittenem Halmgut gewickelt wird.

## Claims

1. Big roll baler for cut straw material, including an upwardly pivotable pressure chamber (1), which has an inlet aperture for the straw material and a binding arrangement for the finished rolls, a pick-up arrangement (16) for picking-up the straw material, a feed drum which is disposed between the pick-up arrangement (16) and the inlet aperture and has a length corresponding to the width of the roll to be formed, and a cutting mechanism which is provided in a feed channel (3), the cutting mechanism comprising a plurality of cutters (6, 8), which protrude into the feed channel (3) in their cutting position and are disposed in at least one row, each cutter being mounted so as to be pivotable into and out of the feed channel (3), **characterised in that** the cutters (6, 8) are retained in their cutting position by means of spring-loaded cutter levers (7, 9) and are pivotable in their entirety by means of a pivot arrangement (12, 13, 13', 13", 22) in a direction in opposition to the spring loading as far as a location where they exert no cutting action on the straw material, the pivot arrangement being controllable by a sensor for sensing an internal pressure of the big roll, or by a measuring arrangement for measuring the diameter of the big roll, in such a manner that at least the outermost surface layer of the big roll can be wound from uncut straw material.

2. Big roll baler according to claim 1, **characterised in that** the cutter levers (9) of at least one row of cutters (8) are mounted on a fixed pin (10) so as to be rotatable in substantially their centre, and there is associated with this row of cutters (8) a control shaft (12), which is provided with a number of cam plates (13, 13', 13") directly associated with the cutter levers (9), the number of cam plates corresponding to the number of cutters (8) and the cam plates being disposed so as to be offset from one another relative to the circumference of the control shaft.

3. Big roll baler according to claim 2, **characterised in that** each cam plate (13, 13', 13") has a lifting cam, a central component part and a lowering cam.

4. Big roll baler according to claim 2 or 3, **characterised in that** the control shaft (12) is connected to a rotary device.

5. Big roll baler according to claim 4, **characterised in that** the rotary device for rotating the control shaft (12) has a spur gear or worm gear.

6. Big roll baler according to claim 4, **characterised in that** the rotary device for rotating the control shaft (12) has a threaded pull or push rod, which is provided with a hand ratchet.

7. Big roll baler according to claim 4, **characterised in that** the rotary device has a threaded pull or push rod, which is provided with a pressure cylinder.

8. Big roll baler according to claim 4, **characterised in that** the rotary device has a stepped drive provided with a locking pawl and a sprocket wheel (20), which component parts are connected to the pick-up arrangements (16) for picking-up the straw material by means of a pull rod (18), said pick-up arrangements being pivotable by means of hydraulic cylinders.

9. Big roll baler according to claim 8, **characterised in that** a rotatable adjusting segment (23) is associated with the sprocket wheel (20) and abuts against the sprocket wheel (20) by the influence of the force of a spring (24), the adjusting segment (13) being engageable in said sprocket wheel and having a portion ("I"), which has at least the width of one tooth space of the sprocket wheel and extends beyond the outer edge of the sprocket wheel (20) in the region of this portion and enters the range of action of a feed pawl (21).

10. Big roll baler according to one of claims 2 to 9, **characterised in that** the row of cutters (6, 8) comprises a plurality of cutter groups, and in that the cam plates (13, 13', 13") of each cutter group are offset relative to one another in such a manner that the outward pivotal movement of the next following cutter group assumes an inoperative position only when the outward pivotal movement of the preceding group is effected.

11. Big roll baler according to one of claims 1 to 10, **characterised in that** the control shaft (12) is provided with a brake device.

12. Method of producing a big roll by using a big roll baler according to one of claims 1 to 11, the big roll being wound from cut straw material, **characterised in that** the diameter of the big roll and/or the internal pressure of the big roll are/is measured during the winding process and, upon the attainment of a prescribed threshold value, the cutting mechanism is pivoted totally out of the feed channel, so that at least the outermost surface layer of the big roll is wound from uncut straw material.

## Revendications

1. Presse à grandes balles pour du matériau constitué des brins coupés comprenant une chambre de compression pouvant être ouverte (1), qui présente une ouverture d'entrée pour le matériau constitué des brins et un dispositif de liage pour la balle terminée, un dispositif de réception (16) pour le matériau constitué des brins, un tambour convoyeur placé entre le dispositif de réception (16) et l'ouverture d'entrée, le tambour convoyeur dont la longueur correspond à la largeur de la balle à former, ainsi qu'un dispositif de coupe qui est prévu dans un canal convoyeur (3), le dispositif de coupe comprenant une multitude de couteaux (6, 8) disposés de manière à pouvoir être pivotés dans le canal convoyeur (3) et hors de celui-ci, respectivement, et disposé suivant au moins une rangée et faisant saillie dans le canal convoyeur (3) dans leur position de coupe, **caractérisée en ce que** les couteaux (6, 8) sont maintenus dans leur position de coupe au moyen de leviers à couteaux (7, 9) sollicités par ressort et peuvent être pivotés dans leur ensemble, par l'intermédiaire d'un dispositif de pivotement (12, 13, 13', 13", 22) à l'encontre de la sollicitation de ressort jusqu'à un emplacement où ils n'exercent pas d'action de coupe sur le matériau constitué des brins, le dispositif de pivotement pouvant être commandé par un capteur d'une pression interne de la grande balle ou par un dispositif de mesure pour le diamètre de la grande balle de façon qu'au moins la couche d'enveloppe la plus externe de la grande balle peut être roulée en matériau constitué des brins non coupé.

2. Presse à grandes balles selon la revendication 1, **caractérisée en ce que** les leviers à couteaux (9) au moins d'une rangée de couteaux (8) sont placés à peu près à leur milieu de façon rotative autour d'un goujon fixe (10), et qu'à cette rangée de couteaux (8) est associé un arbre de commutation (12) pourvu d'un nombre de disques à came (13, 13', 13") associés directement aux leviers à couteaux (9) et correspondant au nombre des couteaux (8), les disques à came étant disposés de façon décalée les uns aux autres par rapport au pourtour de l'arbre de commutation.

3. Presse à grandes balles selon la revendication 2, **caractérisée en ce que** chaque disque à came (13, 13', 13".) présente une courbe de levée, une partie centrale et une courbe d'abaissement.

4. Presse à grandes balles selon la revendication 2 ou 3, **caractérisée en ce que** l'arbre de commutation (12) est relié à un dispositif de rotation.

5. Presse à grandes balles selon la revendication 4, **caractérisée en ce que** le dispositif de rotation de l'arbre de commutation (12) présente une roue droite ou une roue à denture hélicoïdale.

6. Presse à grandes balles selon la revendication 4, **caractérisée en ce que** le dispositif de rotation de l'arbre de commutation (12) présente un tirant à filet ou une tige de compression avec cliquet à main.

7. Presse à grandes balles selon la revendication 4, **caractérisée en ce que** le dispositif de rotation présente un tirant à filet ou une tige de compression avec un cylindre de compression.

8. Presse à grandes balle selon la revendication 4, **caractérisée en ce que** le dispositif de rotation présente un entraînement à paliers avec un verrouillage à cliquet et une roue à pointes (20) reliée par l'intermédiaire d'un tirant (18) aux dispositifs de réception (16) du matériau constitué des brins, pouvant être pivotés par l'intermédiaire de vérins hydrauliques.

9. Presse à grandes balle selon la revendication 8, **caractérisée en ce qu'**un segment de positionnement (23) rotatif est associé à la roue à pointes (20) et qui, sous l'action d'un ressort (24), porte contre la roue à pointes (20) et peut s'encliqueter dans celle-ci, le segment de positionnement (13) présentant un tronçon ("I") qui a au moins la largeur d'une entredent de la roue à pointes et fait saillie dans la zone de ce tronçon au-delà du bord extérieur de la roue à pointes (20) et rentre dans la zone d'action d'un levier d'avancement (21).

10. Presse à grandes balle selon l'une des revendications 2 à 9, **caractérisée en ce que** la rangée de couteaux (6, 8) est constituée de plusieurs groupes de couteaux, et en ce que les disques à came (13, 13', 13") de chaque groupe de couteaux sont décalés les uns par rapport aux autres de façon que le pivotement du groupe de couteaux suivant vers une position hors fonctionnement se produit seulement lorsque le pivotement du groupe précédent est terminé.

11. Presse à grandes balles selon l'une des revendications 1 à 10, **caractérisée en ce que** l'arbre de commutation (12) est pourvu d'un dispositif de freinage.

12. Procédé de réalisation d'une grande balle par mise en oeuvre d'une presse à grandes balles selon l'une des revendications 1 à 11, la grande balle étant roulée de matériau constitué des brins coupé, **caractérisé en ce que** le diamètre de la grande balle et/ou la pression intérieure de la grande balle pendant l'opération d'enroulement est mesuré et lorsqu'une valeur de seuil prédéterminée est atteinte, le dispositif de coupe dans son ensemble est pivoté hors du canal convoyeur de façon qu'au moins la couche d'enveloppe la plus externe de la grande balle est roulée de matériau constitué des brins non coupé.

Fig 1

EP 0 341 508 B1

Fig.2

Fig.3

EP 0 341 508 B1

Fig.4